Europäisches Patentamt

European Patent Office

Office européen des brevets

(11) Publication number: **0 216 568**
A2

# EUROPEAN PATENT APPLICATION

(21) Application number: 86306973.8

(22) Date of filing: 10.09.86

(51) Int. Cl.⁴: **B 01 J 8/18**
//C10G1/06, C10J3/48

(30) Priority: 18.09.85 GB 8523019

(43) Date of publication of application:
01.04.87 Bulletin 87/14

(84) Designated Contracting States:
BE DE FR IT NL SE

(71) Applicant: British Gas plc
Rivermill House 152 Grosvenor Road
London SW1V 3JL(GB)

(72) Inventor: Lee, Anthony
12 Morestead Avenue
Sheldon Birmingham(GB)

(72) Inventor: Wild, Keith Robert
18 Mayama Road Fazeley
Tamworth Staffordshire(GB)

(72) Inventor: Peel, Roderick Lewis
Stelfox House 142 Widney Lane
Solihull B91 3LH(GB)

(54) Gas solid phase reactions and apparatus therefor.

(57) Gas-solid phase reactions can be effected in apparatus comprising a reaction chamber arranged and adapted to define an endless, preferably substantially horizontal path, at least a portion of which is circular. The apparatus also includes inlet means for introducing reactants into the chamber, the inlet being preferably located such that the reactants entering the chamber follow a path which is tangential to the circularly moving reactants within the chamber.

FIG. 1.

0216568

## Apparatus & Method for Performing Gas-Solid Phase Reactions

This invention relates to apparatus and method for carrying out chemical reactions, particularly gas-solid phase reactions such as the thermal hydrogenation of carbonaceous materials eg. coal particles and coal chars to produce synthesis for fuel gases.

In our European Patent Publication No. 0095237, we disclose a method for hydrogenating carbonaceous materials wherein said fuel and a gas comprising hydrogen are continuously introduced into a thermally insulated reaction chamber so constructed as to define an endless path along which reactants and reaction products can circulate within the chamber and said fuel and said gas comprising hydrogen are admixed and introduced in the form of at least one jet through orifice means into the reaction chamber to cause a substantial amount of an admixture of reactants and reaction products to circulate continuously around the said endless path characterised in that said fuel is solid particulate carbonaceous material transported in a stream of a hydrogen containing gas whose temperature is not greater than 200°C and wherein a portion of the reaction products is continuously withdrawn from the chamber, sufficient remaining in the chamber to permit adequate recirculation to support reaction of the fuel particles and produce a reaction product whose temperature is not less than 700°C.

In the above Publication it is mentioned that apparatus for carrying out the reaction may be that as described in UK Patent Specifications

Nos. 1031717 and 1074932. This apparatus essentially comprises two co-axially arranged cylinders, the inner one being of shorter internal length than the outer. This arrangement defines a reaction chamber divided into two zones or regions, the volume defined by the inner chamber or cylinder being a riser zone whilst that of the outer annular region is a downcomer zone. Thus reactants enter the riser and travel through an endless path by crossing above the inner wall and descending through the outer annular downcomer.

Such apparatus was originally conceived for the thermal hydrogenation of liquid carbonaceous feedstocks such as non-distillate oils, and is known as a Gas Recycle Hydrogenator (GRH). The adaptation and development of the GRH reactor for the hydrogenation of solid carbonaceous feedstocks arose out of the necessity to provide long residence times coupled with the rapid heating and mixing conditions obtained with entrained-flow regimes. The improvement that this GRH based design confers over other coal hydrogenation processes is fully discussed in our aforementioned European Patent Publication No. 0095237. However, whilst the GRH type of reactor encourages gas recirculation this is not necessarily true for solids recirculation. Attempts to increase the entrained flow velocity or recirculation rate have a tendency to increase solids carry over with the product gas with the comcommitant need to provide gas-solids separators downstream.

The present invention therefore proposes means for carrying out such gas-solids phase hydrogenation reactions under entrained flow conditions whilst maintaining sufficient residence time to allow the reaction to come to equilibrium whilst allowing control of the solids-gas ratio of the product stream.

In accordance with the present invention there is provided apparatus for carrying out gas-solid phase reactions including a rection chamber arranged and adapted to define an endless path along which reactants may move and at least a portion of which path is circular (as hereinafter defined), means for introducing at least one gaseous reactant and at least one solid, particulate reactant into said chamber and off-take means for removing reaction products from said chamber.

The chamber may have various configurations provided that at least part of it is adapted to define a substantially circular pathway preferably in the horizontal plane. The term "circular" includes not only symetrical geometric configuration but also assymetrical configurations such as ovoids or ellipses.

The reactor could be a pipe or tubular reactor, arranged to define a torus

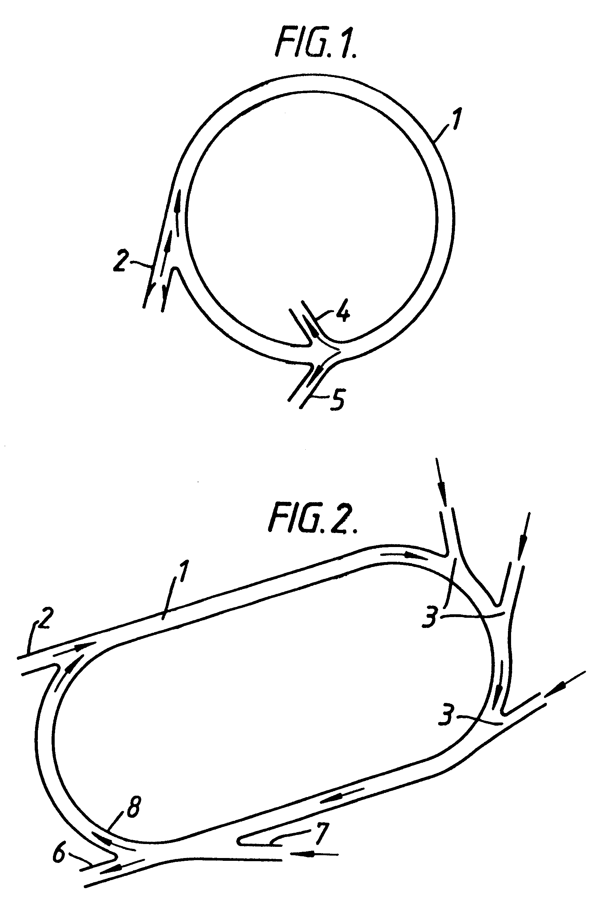

The invention will be further described with reference to the accompanying drawings in which both Figures 1 and 2 are schematic representations of embodiments of the invention.

The reaction chamber comprises a tubular portion 1 in the form of a large diameter circle or elipse. Pulverised coal and pre-heated hydrogenating gas e.g. hydrogen per se are premixed and fed into the circular reactor 1 through inlet 2, arranged tangentially with respect to the reactor path. The reactants are injected in at a velocity such as to fully entrain the coal particles, for example between 1 to 16 m.sec$^{-1}$. Recirculation is driven by the momentum of the incoming reactants. However, as shown in Figure 2 additional reactants may be injected in at points 3 in order to maintain the drive or assist recirculation.

The means of gas and (solids, e.g. char) removal presents the method by which the average solids residence time can be controlled. Centifugal forces acting on the solids particles in the circular portions of the path would induce some gradient of particle concentration, with the higher concentration at the outer circumference of the pipe. Referring to Figure 1, a pair of offtakes 4,5 are provided respectively on the inner and outer circumferences of the pipe. Control of the quantities of solids removed from either offtake will then allow a variation of the gas-solids ratio of products and hence control of the average solids residence time. Solids, e.g. char, passing out with the product gas can be separated in a cyclone.

In an alternative embodiment, as shown in Figure 2, the reactor is constructed in the form of an elipse. Recirculation is maintained by injecting hydrogenating gas through inlet 7. Gas injection will adjust the particle trajectory at the point of the offtake 6. By varying the velocity of the injected gas 7, control can be exercised over the ratio of particles escaping through off-take 6 to those diverted along the circular portion 8 of path 1.

By effecting hydrogenation reactions in apparatus according to the present invention a number of technical advantages can be realised :

(i)    Longer and controlled average solids residence time can be accommodated in a compact sized reactor.

(ii)   The heat of reaction can be utilized to preheat the reactants to reaction initiation temperature by allowing some recirculation of the reaction products.

(iii) Rapid heating of coal particles in the recirculating gases reduces the likelyhood of agglomeration of the particles.

(iv)  Since it is possible to control the necessary residence time by the use of recirculation it is not necessary to employ reactors of large diameter. Thus the use of small diameter pipework for the reactor paths allows for the presentation of a sufficient surface area, in relation to throughput, to allow heat transfer into concentrically arranged pipework containing, for example, hydrogenating gas or steam for power requirements.

CLAIMS

1. Apparatus for carrying out gas-solid phase reactions comprising a reaction chamber arranged and adapted to define an endless pathway, inlet means for introducing at least one gaseous reactant and at least one solid particulate reactant into said chamber and off-take means for removing reaction products from said chamber, characterised in that at least a portion of the pathway is circular with respect to the direction of movement of the reactants.

2. Apparatus as claimed in Claim 1 wherein said inlet means are located tangentially with respect to said circular portion of said path.

3. Apparatus as claimed in Claim 1 in which said path is substantially horizontal.

4. Apparatus as claimed in Claim 1 wherein said chamber is arranged and adapted to define a torus.

5. Apparatus as claimed in Claim 4 wherein a pair of off-takes are located on respectively the inner and outer peripheries of the torus.

6. Apparatus as claimed in Claim 4 wherein both said inlet and off-take means are located tangentially with respect to said circular portion of said path, such that the path defined by products exiting through said off-takes interrupts the path defined by reactants being introduced through said inlet means.

0216568

FIG.1.

FIG.2.